# EUROPÄISCHE PATENTANMELDUNG

(11) **EP 3 828 132 A1**
(43) Veröffentlichungstag der Anmeldung: **02.06.2021**
(21) Anmeldenummer: 19020665.6
(22) Anmeldetag: 26.11.2019
(51) Int. Cl.: C01B 3/38, B01D 53/047, C01B 3/50, C01B 3/56

(54) **VERFAHREN UND ANLAGE ZUM HERSTELLEN VON REINWASSERSTOFF**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Swatantra, Shrivastava, 35423 Lich (DE); Mrityunjoy, Samaddar, 60439 Frankfurt (DE); Mirko, Huebel, 60486 Frankfurt (DE)
(74) Vertreter: Dropsch, Holger

(57) **Zusammenfassung**

Die Erfindung betrifft ein Verfahren und eine Anlage zum Herstellen von Reinwasserstoff aus einem Wasserstoff und Kohlenwasserstoffe enthaltenden Einsatzgas, insbesondere aus einem wasserstoffhaltigen Raffinerieabgas, mittels Dampfreformierung in einer Dampfreformierungsstufe und mehrstufiger Wasserstoffanreicherung. Erfindungsgemäß wird das Wasserstoff und Kohlenwasserstoffe enthaltende Einsatzgas in einer ersten Wasserstoffanreicherungsstufe in einen an Wasserstoff angereicherten Teilstrom und einen an Wasserstoff abgereicherten Teilstrom aufgetrennt, wobei mindestens ein Teil des an Wasserstoff angereicherten Teilstroms einer zweiten Wasserstoffanreicherungsstufe zugeführt oder in den Reinwasserstoff-Produktstrom eingeleitet wird und mindestens ein Teil des an Wasserstoff abgereicherten Teilstroms der Dampfreformierungsstufe als Reformierungsfeedstrom oder als Teil desselben und/oder den Brennern als Brenngasstrom zugeführt wird.

## Beschreibung

### Gebiet der Erfindung

Die vorliegende Erfindung betrifft ein Verfahren zum Herstellen von Reinwasserstoff aus einem Wasserstoff und Kohlenwasserstoffe enthaltenden Einsatzgas, insbesondere aus einem wasserstoffhaltigen Raffinerieabgas, mittels Dampfreformierung und mehrstufiger Wasserstoffanreicherung. Ferner betrifft die Erfindung auch eine Anlage zur Durchführung eines solchen Verfahrens.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Hierfür können kohlenwasserstoffhaltige Einsatzgase wie insbesondere Erdgas eingesetzt werden. Da Erdgas als Hauptbestandteil Methan enthält, wird diesbezüglich auch von Steam Methane Reforming (SMR) gesprochen. Es können aber auch weitere kohlenwasserstoffhaltige Stoffströme, beispielsweise Naphtha oder Flüssiggas, als Einsatzstoffe für die Dampfreformierung eingesetzt werden. Ferner ist es möglich und oft vorteilhaft, einen Mischstrom der genannten und/oder weiterer kohlenwasserstoffhaltige Stoffströme als Einsatzstoffe für die Dampfreformierung zu verwenden.

Die Dampfreformierung von Kohlenwasserstoffen verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Reformerrohre werden zumeist mittels Brennern befeuert, die an der Oberseite oder Unterseite oder an den Seitenwänden im Innenraum des Reformerofens angebracht sind und direkt den Zwischenraum zwischen den Reformerrohren befeuern.

Nach Vorerhitzung durch Wärmetauscher oder befeuerte Heizer tritt das Kohlenwasserstoff-Dampf-Gemisch nach Enderhitzung in die Reformerrohre ein und wird dort am Reformierungskatalysator zu Kohlenmonoxid und Wasserstoff umgesetzt. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf.

Zur Energieoptimierung und/oder bei Einsatzstoffen mit höheren Kohlenwasserstoffen kann nach dem Vorerhitzer ein sogenannter Prereformer (Vorreformer) zur Vorspaltung des Einsatzstoffes eingesetzt werden. Der vorgespaltene Einsatzstoff wird dann in einem weiteren Erhitzer auf die gewünschte Eintrittstemperatur in den Hauptreformer, beispielsweise den Steamreformer, erhitzt. Die konventionelle Vorreformierung kann als Dampfreformierungsprozess bei begrenzten Temperaturen definiert werden (deutlich unter 700 °C). Sie führt zu einem gasförmigen Zwischenprodukt, dessen Hauptbestandteile Methan und Dampf sind. Das Zwischenprodukt enthält keine oder nur noch geringfügige Anteile höherer Kohlenwasserstoffe. Normalerweise wird dieses Zwischenprodukt in einem als Hauptreformer bezeichneten Steamreformer weiterbehandelt.

Die Aufarbeitung des bei der Dampfreformierung erhaltenen Rohsynthesegases, das neben Wasserstoff auch Kohlenoxide sowie nicht umgesetzte Kohlenwasserstoffe, beispielsweise Methan enthält, erfolgt mehrstufig und in Abhängigkeit von dem gewünschten Zielprodukt. Praktisch immer werden dabei ein oder mehrere Abkühlungsschritte mit oder ohne Dampferzeugung umfasst, wobei oft ein Teil des erzeugten Dampfes als Exportdampf an externe Verbraucher abgegeben wird. Bei der Abkühlung anfallende Kondensate werden abgetrennt und beispielsweise als Prozessdampf in das Dampfreformierungsverfahren zurückgeführt. Ferner kann der Wärmeinhalt des abzukühlenden Rohsynthesegases und des von den Brennern erzeugten Rauchgases zur Vorwärmung anderer Verfahrensmedien genutzt werden.

Wenn eine möglichst hohe Wasserstoffausbeute gefordert wird, wird das Rohsynthesegas einer CO-Konvertierung (CO-Shift) unterzogen, bei der Kohlenmonoxid katalytisch mit zugesetztem Wasserdampf zu Wasserstoff und Kohlendioxid umgesetzt wird. Daran schließen sich Schritte zum Entfernen des Kohlendioxids, z. B. mittels Gaswäsche mit aminhaltigen Waschmitteln, und zum Abtrennen sonstiger unerwünschter Gastbestandteile, beispielsweise des Methans, durch kryogene Gaszerlegung in einer sog. Coldbox an.

Zur Herstellung von Reinwasserstoff folgt als abschließender Schritt üblicherweise die Behandlung des Rohwasserstoffstroms in einer Anlage zur Druckwechseladsorption (pressure swing adsorption, PSA), deren grundsätzliche Eigenschaften in dem Buch "Gasification", C. Higman und M. van der Burgt, Kapitel 8.2.3 "Adsorption systems", Gulf Professional Publishing (2003), dargestellt werden. Ihr optimaler Betriebsdruck liegt zwischen 15 und 30 bar, wobei dann Wasserstoffausbeuten zwischen 80 und 92 % erreicht werden können. Bei höheren Betriebsdrücken geht die Wasserstoffausbeute zurück. Die Temperatur des PSA-Feedgases liegt üblicherweise unter 40 °C, wobei entstehendes Kondensat zuvor abgetrennt wird.

Die Druckwechseladsorption verwendet Molekularsiebe als Adsorbentien in einer Reihe von Behältern, die in einem gestaffelten zyklischen Modus betrieben werden, der zwischen einer Adsorptionsphase und verschiedenen Phasen der Regeneration wechselt. Die Regeneration des beladenen Adsorbens erfolgt durch schrittweise Druckentlastung und durch die Verwendung des Gases aus diesem Vorgang, um andere Adsorber im Regenerationszyklus mit einem anderen Druckniveau zu spülen. Die Wasserstoffrückgewinnung kann je nach Anzahl der Adsorber in einer Linie bis zu 90 % und bis zu 10 % betragen. Es kann eine sehr hohe Reinheit erreicht werden, mit etwa 50 ppm Argon und weniger als 10 ppm anderer Verunreinigungen.

Für die Dampfreformierung ist zwar die Verwendung von methanhaltigem Erdgas als Einsatzstoff oder sog. Feed dominierend; es werden, je nach lokaler Verfügbarkeit, aber auch andere Kohlenwasserstoffe, wie beispielweise Naphtha, Flüssiggas oder Raffineriegase eingesetzt. Die internationale Patentanmeldung WO 2017/157531 A1 offenbart ein Verfahren zur Herstellung eines gemischten Feedstroms für eine Dampfreformierungsanlage, wobei ein Raffinerieabgas als Ausgangsbasis dient, denen ein Erdgasstrom zugemischt wird. Dieses Raffineriegas enthält rund 21 mol.-% Wasserstoff. Typische für diesen Zweck eingesetzte Raffinerieabgase sind beispielsweise FCC-Abgas oder Coker-Abgas.

Bei der Verwendung von wasserstoffhaltigem Einsatzgas als Einsatzstoff für die Dampfreformierung ist es nachteilig, dass der enthaltene Wasserstoffanteil bei herkömmlicher Verfahrensweise durch die gesamte Dampfreformierungsanlage geleitet wird, also durch Feed-Vorbehandlung, Vorwärmung, Reformierung, Synthesegaskühlung sowie ggf. weitere Konditionierungsstufen, bevor der Wasserstoffanteil in die Wasserstoffreinigungsanlage gelangt, die zumeist gemäß des Druckwechseladsorptionsverfahrens arbeitet. Hiermit sind Wasserstoffverluste und ein erhöhter Energieeinsatz verbunden.

### Beschreibung der Erfindung

Es ist daher die Aufgabe der vorliegenden Erfindung, ein Verfahren und eine Anlage zum Herstellen von Reinwasserstoff aus einem Wasserstoff und Kohlenwasserstoffe enthaltenden Einsatzgas anzugeben, das ohne die beschriebenen Nachteile des Standes der Technik auskommt.

Diese Aufgabe wird durch ein Verfahren mit den Merkmalen des Anspruchs 1 und durch eine Anlage mit den Merkmalen des Anspruchs 11 gelöst. Weitere Ausgestaltungen der Erfindung ergeben sich aus den jeweiligen Unteransprüchen.

Unter einem Aufteilen oder Auftrennen eines Stoffstroms ist im Zusammenhang mit der vorliegenden Erfindung die Erzeugung mindestens zweier Teilströme aus dem ursprünglichen Stoffstrom zu verstehen, wobei mit dem Auftrennen eine beabsichtigte Änderung der stofflichen Zusammensetzung der erhaltenen Teilströme in Bezug auf den ursprünglichen Stoffstrom verbunden ist, beispielsweise durch Anwendung eines thermischen Trennverfahrens auf den ursprünglichen Stoffstrom. Dagegen ist mit dem Aufteilen des ursprünglichen Stoffstroms in der Regel keine Änderung der stofflichen Zusammensetzung der erhaltenen Teilströme verbunden.

Die für die Durchführung der Dampfreformierung bzw. der Hydrodesulfurierung anzuwendenden Reaktions- und Verfahrensbedingungen dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von Kohlenwasserstoffen zu Synthesegasprodukten bzw. von schwefelhaltigen Kohlenwasserstoffen zu schwefelfreien Kohlenwasserstoffen erzielt wird. Notwendige Anpassungen dieser Bedingungen an die jeweiligen Betriebserfordernisse wird er auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Die optionalen weiteren Behandlungsschritte, die mit dem als Reformierungsproduktstrom erhaltenen Rohysnthesegas durchgeführt werden können, umfassen insbesondere due Durchführung eines oder mehrere Abkühlungsschritte mit oder ohne Dampferzeugung, den Wärmetausch des abzukühlenden Rohsynthesegases und des von den Brennern erzeugten Rauchgases zur Vorwärmung von Verfahrensmedien, die CO-Konvertierung (CO-Shift) zur Maximierung des Wasserstoffgehalts, Schritte zum Entfernen des Kohlendioxids, z. B. mittels Gaswäsche mit aminhaltigen Waschmitteln, und Maßnahmen zum Abtrennen sonstiger unerwünschter Gastbestandteile, beispielsweise des Methans, durch kryogene Gaszerlegung in einer sog. Coldbox.

Als höhere Kohlenwasserstoffe werden im Sinne der Erfindung alle Kohlenwasserstoffe mit mehr als einem C-Atom im Molekül verstanden.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Die Angabe, dass ein Stoffstrom direkt einer spezifischen Verfahrensstufe oder einem spezifischen Anlagenteil zugeführt wird, ist so zu verstehen, dass der Stoffstrom in diese Verfahrensstufe oder diesen Anlagenteil eingeleitet wird, ohne dass zuvor ein Durchleiten durch andere Verfahrensstufen oder Anlagenteile erfolgte, mit Ausnahme reiner Transportvorgänge und der dazu benötigten Mittel, beispielsweise Rohrleitungen, Ventile, Pumpen, Verdichter, Vorratsbehälter.

Alle Druckangaben erfolgen als Überdruckeinheiten, also bar Überdruck bzw. barg, wenn im jeweiligen Einzelzusammenhang nichts anderes angegeben wird.

Der Erfindung liegt die Erkenntnis zugrunde, dass es bei Verwendung von Einsatzgasen für die Dampfreformierung, die bereits einen nennenswerten Anteil an Wasserstoff enthalten, ungünstig ist, den enthaltenen Wasserstoff gemeinsam mit den enthaltenen Kohlenwasserstoffen durch alle Stufen eines konventionellen Dampfreformierungsverfahren zur Wasserstofferzeugung gemäß Stand der Technik zu führen, also durch Feedvorbereitung, Entschwefelung, Aufheizung, Dampfreformierung, Abkühlung und Wärmetausch, CO-Konvertierung, Gaswäsche zur Kohlendioxid-Entfernung, kryogene Gaszerlegung, bevor erst in der Druckwechseladsorptionsstufe die Gewinnung des Reinwasserstoffs erfolgt. Diese Vorgehensweise führt zu Wasserstoffverlusten und einem erhöhter Energieeinsatz, der wiederum mit erhöhten Kohlendioxid-Emissionen mit dem Rauchgas verbunden ist.

Erfindungsgemäß wird daher gemäß eines ersten Aspekts bei dem vorgeschlagenen Verfahren ein Teilstrom des Wasserstoff und Kohlenwasserstoffe enthaltenden Einsatzgasstroms einer ersten Wasserstoffanreicherungsstufe zugeführt und in dieser in einen an Wasserstoff angereicherten Teilstrom und einen an Wasserstoff abgereicherten Teilstrom aufgetrennt. Der verbliebene Anteil des Einsatzgasstroms wird der Dampfreformierungsstufe als erster Reformierungsfeedstrom zugeführt und dort zu einem Reformierungsproduktstrom, also Rohsynthesegas umgesetzt, dass nachfolgend die üblichen, oben erläuterten Behandlungsstufen bis zu der zweiten Wasserstoffanreicherungsstufe durchläuft, die als Druckwechseladsorptionsstufe ausgestaltet ist. In die zweite Wasserstoffanreicherungsstufe wird der Reformierungsproduktstrom und der an Wasserstoff angereicherte Teilstrom aus der ersten Wasserstoffanreicherungsstufe geführt, wobei diese Stoffströme zuvor vermischt oder jeweils separat der zweiten Wasserstoffanreicherungsstufe zugeführt werden können, und es wird aus ihnen ein Reinwasserstoffprodukt gewonnen. Es wird somit vermieden, dass der bereits im Einsatzgasstrom enthaltene Wasserstoffanteil denselben Verfahrensstufen unterzogen wird wie die Kohlenwasserstoffe. Dies erhöht die Ausbeute an Reinwasserstoff und führt zu Energieeinsparungen.

Der an Wasserstoff abgereicherte Teilstrom aus der ersten Wasserstoffanreicherungsstufe kann dadurch weiter genutzt werden, dass er der Dampfreformierungsstufe als zweiter Reformierungsfeedstrom und/oder den Brennern als Brenngasstrom zugeführt wird. Dies verbessert die stoffliche und energetische Verfahrenseffizienz zusätzlich.

### Bevorzugte Ausgestaltungen der Erfindung

Ein zweiter Aspekt des erfindungsgemäßen Verfahrens ist dadurch gekennzeichnet, dass der an Wasserstoff angereicherte Teilstrom direkt der zweiten Wasserstoffanreicherungsstufe zugeführt oder direkt in den Reinwasserstoff-Produktstrom eingeleitet wird. Da hierbei dieser Stoffstrom unmittelbar in die zweite Wasserstoffanreicherungsstufe eingeleitet wird oder alternativ bei hohem Wasserstoffgehalt direkt in den Reinwasserstoff-Produktstrom eingeleitet wird, ohne dass zuvor ein Durchleiten durch andere Verfahrensstufen oder Anlagenteile erfolgt, wird der Wasserstoffverlust minimiert und die Ausbeute des Verfahrens an Reinwasserstoff erhöht.

Ein dritter Aspekt des erfindungsgemäßen Verfahrens ist dadurch gekennzeichnet, dass der an Wasserstoff abgereicherte Teilstrom mit dem Reformierungsfeedstrom vermischt wird oder diesen ausschließlich bildet. Auf diese Weise wird der Dampfreformierungsstufe ein Reformierungsfeedstrom homogener Zusammensetzung zugeführt, so ein gleichmäßiger Reformerbetrieb ermöglicht wird und Konzentrationsfluktuationen ausgeglichen oder abgeschwächt werden. Wenn eine ausreichend große Menge an dem an Wasserstoff abgereicherten Teilstrom zur Verfügung steht, kann dieser unter Umständen als einziger Reformierungsfeedstrom verwendet werden, so dass auf die Beimischung eines weiteren, kohlenwasserstoffhaltigen Strom verzichtet werden kann.

Ein vierter Aspekt des erfindungsgemäßen Verfahrens ist dadurch gekennzeichnet, dass die erste Wasserstoffanreicherungsstufe eine wasserstoffselektive Membran enthält, wobei der an Wasserstoff angereicherte Teilstrom als Permeatstrom und der an Wasserstoff abgereicherte Teilstrom als Retentatstrom erhalten wird. Vorteilhaft ist es dabei, dass hierdurch eine kompakte Bauform der ersten Wasserstoffanreicherungsstufe ermöglicht wird und die Wasserstoffabtrennung in selektiver und energieeffizienter Weise durchgeführt werden kann.

Ein fünfter Aspekt des erfindungsgemäßen Verfahrens, insbesondere ausgestaltet gemäß Aspekt 4, ist dadurch gekennzeichnet, dass der Druck des Wasserstoff und Kohlenwasserstoffe enthaltenden Einsatzgasstroms vor Einleiten in die erste Wasserstoffanreicherungsstufe mindestens 50 barg beträgt. Insbesondere bei der Ausgestaltung der ersten Wasserstoffanreicherungsstufe als Membrantrennanlage mit wasserstoffselektiver Membran ist wegen des hohen Druckverlustes bei Durchtritt des Permeats durch die Membran ein ausreichend hoher Vordruck vorteilhaft, da somit kein zusätzlicher Verdichter benötigt wird. Oft steht das Wasserstoff und Kohlenwasserstoffe enthaltenden Einsatzgas, beispielsweise ein Raffinerieabgas, bereits mit solchen Drücken an der Anlagengrenze der Reformeranlage zur Verfügung. Eine Drosselung des Drucks auf den für eine Druckwechseladsorptionsanlage kompatiblen Bereich wäre dann nachteilig und mit Energieverlusten verbunden.

Ein sechster Aspekt des erfindungsgemäßen Verfahrens, insbesondere ausgestaltet gemäß Aspekt 4 oder 5, ist dadurch gekennzeichnet, dass der Wasserstoffgehalt des Wasserstoff und Kohlenwasserstoffe enthaltenden Einsatzgasstroms zwischen 40 und 70 mol-%, bevorzugt zwischen 50 und 68 mol-% beträgt. Untersuchungen haben gezeigt, dass innerhalb der genannten Bereiche die Ausgestaltung der ersten Wasserstoffanreicherungsstufe als Membrantrennanlage die größten Vorteile erbringt. Bei kleineren Wasserstoffgehalten im Einsatzgasstrom ist erbringt die Abtrennung des Wasserstoffs aus dem Einsatzgas mittels der ersten Wasserstoffanreicherungsstufe keine oder nur geringere Vorteile. Bei größeren Wasserstoffgehalten im Einsatzgasstrom ist die Ausgestaltung der ersten Wasserstoffanreicherungsstufe als Druckwechseladsorptionsanalge gegenüber einer Membrantrennanlage vorteilhafter.

Ein siebter Aspekt des erfindungsgemäßen Verfahrens ist dadurch gekennzeichnet, dass die erste Wasserstoffanreicherungsstufe nach dem Prinzip der Druckwechseladsorption (PSA) arbeitet. Diese Technologie ist im Zusammenhang mit der Reinwasserstofferzeugung etabliert und ermöglicht hohe Ausbeuten und Produktreinheiten.

Ein achter Aspekt des erfindungsgemäßen Verfahrens, insbesondere ausgestaltet gemäß Aspekt 7, ist dadurch gekennzeichnet, dass der Wasserstoffgehalt des Wasserstoff und Kohlenwasserstoffe enthaltenden Einsatzgasstroms mehr als 70 mol-% beträgt. Untersuchungen haben gezeigt, dass eine Ausgestaltung der ersten Wasserstoffanreicherungsstufe nach dem Prinzip der Druckwechseladsorption bei hohen Wasserstoffgehalten im Einsatzgasstrom von mehr als 70 mol-% die größten Vorteile bietet.

Ein neunter Aspekt des erfindungsgemäßen Verfahrens ist dadurch gekennzeichnet, dass die Dampfreformierungsstufe mehrere Teilreformierungsstufen umfasst, wobei die strömungsmäßig erste Teilreformierungsstufe als Vorreformierung ausgestaltet ist. Durch die Vorspaltung insbesondere der höheren Kohlenwasserstoffe zu Methan im Prereformer wird im Hauptreformer ein homogenerer Reaktionsablauf ermöglicht und es verringert sich die im Hauptreformer benötigte Wärmeenergie. Ein homogener Reaktionsablauf im Hauptreformer ist wegen der im Vergleich zum Prerefomer viel größeren Baugröße mit einer Vielzahl brennerbeheizter Reformerrohre von großer Bedeutung. Insofern ergeben sich vorteilhafte Wechselwirkungen mit dem dritten Aspekt des erfindungsgemäßen Verfahrens, da auch dieser zu einem homogenen Reformerbetrieb beiträgt.

Ein zehnter Aspekt des erfindungsgemäßen Verfahrens ist dadurch gekennzeichnet, dass der Reformierungsfeedstrom einem Hydrodesulfurierungsschritt (HDS) zugeführt wird, wobei der Reformierungsfeedstrom mit einem Hydrierungsmittel vermischt und ihm unter Hydrodesulfurierungsbedingungen mindestens teilweise der Schwefel entzogen wird, wobei mindestens ein Teil des an Wasserstoff angereicherten Teilstroms als Hydrierungsmittel verwendet wird. Vorteilhaft ist es dabei, dass auf diese Weise der als Hydrierungsmittel verwendete Wasserstoff bereits für die Hydrodesulfurierung zur Verfügung steht, bevor die Dampfreformierungsanlage und nachgeschaltete Verfahrensstufen zur Reinwasserstofferzeugung vollständig in Betrieb genommen wurden. Es kann beispielsweise der in einer Memebrantrennanlage erhaltene, wasserstoffreiche Permeatstrom als HDS-Hydrierungsmittel verwendet werden.

In einem weiteren Aspekt der Erfindung ist die erfindungsgemäße Anlage dadurch gekennzeichnet, dass die Mittel zum Zuführen des an Wasserstoff angereicherten Teilstroms zu der zweiten Wasserstoffanreicherungsstufe oder die Mittel zum Einleiten desselben in den Reinwasserstoff-Produktstrom so beschaffen sind, dass der an Wasserstoff angereicherte Teilstroms direkt der zweiten Wasserstoffanreicherungsstufe zugeführt oder direkt in den Reinwasserstoff-Produktstrom wird. Da hierbei dieser Stoffstrom unmittelbar in die zweite Wasserstoffanreicherungsstufe eingeleitet wird oder alternativ bei hohem Wasserstoffgehalt direkt in den Reinwasserstoff-Produktstrom eingeleitet wird, ohne dass zuvor ein Durchleiten durch andere Verfahrensstufen oder Anlagenteile erfolgt, wird der Wasserstoffverlust minimiert und die Ausbeute des Verfahrens an Reinwasserstoff erhöht.

In einem weiteren Aspekt der Erfindung ist die erfindungsgemäße Anlage dadurch gekennzeichnet, dass die Anlage Mittel umfasst, die es gestatten, dass der an Wasserstoff abgereicherte Teilstrom mit dem Reformierungsfeedstrom vermischt wird oder diesen ausschließlich bildet. Auf diese Weise wird der Dampfreformierungsstufe ein Reformierungsfeedstrom homogener Zusammensetzung zugeführt, so ein gleichmäßiger Reformerbetrieb ermöglicht wird und Konzentrationsfluktuationen ausgeglichen oder abgeschwächt werden. Wenn eine ausreichend große Menge an dem an Wasserstoff abgereicherten Teilstrom zur Verfügung steht, kann dieser unter Umständen als einziger Reformierungsfeedstrom verwendet werden, so dass auf die Beimischung eines weiteren, kohlenwasserstoffhaltigen Strom verzichtet werden kann.

In einem weiteren Aspekt der Erfindung ist die erfindungsgemäße Anlage dadurch gekennzeichnet, dass die erste Wasserstoffanreicherungsstufe eine wasserstoffselektive Membran enthält, wobei der an Wasserstoff angereicherte Teilstrom als Permeatstrom und der an Wasserstoff abgereicherte Teilstrom als Retentatstrom erhalten wird, oder dass die erste Wasserstoffanreicherungsstufe nach dem Prinzip der Druckwechseladsorption (PSA) arbeitet. Bei der Ausgestaltung der ersten Wasserstoffanreicherungsstufe als Membrantrennung ist vorteilhaft, dass hierdurch eine kompakte Bauform ermöglicht wird und die Wasserstoffabtrennung in selektiver und energieeffizienter Weise durchgeführt werden kann. Andererseits ermöglicht die Ausgestaltung der ersten Wasserstoffanreicherungsstufe als Druckwechseladsorption die Verwendung etablierter Technologien und hohe Ausbeuten und Produktreinheiten.

In einem weiteren Aspekt der Erfindung ist die erfindungsgemäße Anlage dadurch gekennzeichnet, dass die Dampfreformierungsstufe mehrere Teilreformierungsstufen umfasst, wobei die strömungsmäßig erste Teilreformierungsstufe als Vorreformierung ausgestaltet ist. Durch die Vorspaltung insbesondere der höheren Kohlenwasserstoffe zu Methan im Prereformer wird im Hauptreformer ein homogenerer Reaktionsablauf ermöglicht und es verringert sich die im Hauptreformer benötigte Wärmeenergie. Ein homogener Reaktionsablauf im Hauptreformer ist wegen der im Vergleich zum Prerefomer viel größeren Baugröße mit einer Vielzahl brennerbeheizter Reformerrohre von großer Bedeutung.

In einem weiteren Aspekt der Erfindung ist die erfindungsgemäße Anlage dadurch gekennzeichnet, dass eine Hydrodesulfurierungsstufe und ferner Mittel umfasst werden, die es gestatten, dass der Reformierungsfeedstrom der Hydrodesulfurierungsstufe zugeführt wird, wobei die Hydrodesulfurierungsstufe in der Weise in Fluidverbindung mit der ersten Wasserstoffanreicherungsstufe steht, dass mindestens ein Teil des an Wasserstoff angereicherten Permeatstroms in der Hydrodesulfurierungsstufe als Hydrierungsmittel verwendbar ist. Vorteilhaft ist es dabei, dass auf diese Weise der als Hydrierungsmittel verwendete Wasserstoff bereits für die Hydrodesulfurierung zur Verfügung steht, bevor die Dampfreformierungsanlage und nachgeschaltete Verfahrensstufen zur Reinwasserstofferzeugung vollständig in Betrieb genommen wurden. Es kann beispielsweise der in einer Memebrantrennanlage erhaltene, wasserstoffreiche Permeatstrom als HDS-Hydrierungsmittel verwendet werden.

### Ausführungs- und Zahlenbeispiele

Weitere Merkmale, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: das Blockschaltbild eines Verfahrens bzw. einer Anlage zum Herstellen von Reinwasserstoff aus einem Wasserstoff enthaltenden Raffinerieabgas gemäß des Stands der Technik,
- Fig. 2: das Blockschaltbild eines Verfahrens bzw. einer Anlage zum Herstellen von Reinwasserstoff aus einem Wasserstoff enthaltenden Raffinerieabgas gemäß einer ersten Ausgestaltung der Erfindung,
- Fig. 3: das Blockschaltbild eines Verfahrens bzw. einer Anlage zum Herstellen von Reinwasserstoff aus einem Wasserstoff enthaltenden Raffinerieabgas gemäß einer zweiten Ausgestaltung der Erfindung,
- Fig. 4: das Blockschaltbild eines Verfahrens bzw. einer Anlage zum Herstellen von Reinwasserstoff aus einem Wasserstoff enthaltenden Raffinerieabgas gemäß einer dritten Ausgestaltung der Erfindung.

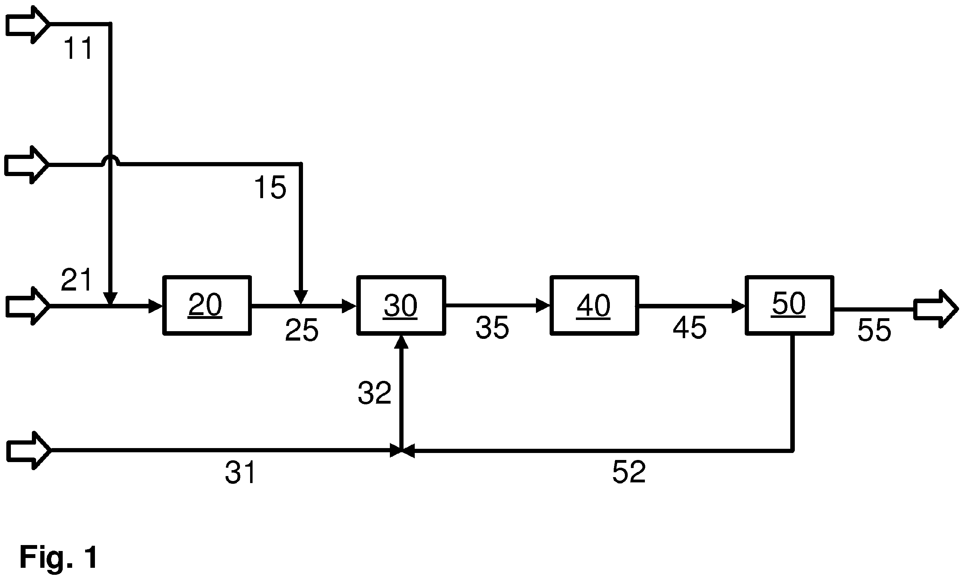

In dem in Fig. 1 gezeigten Blockschaltbild des Verfahrens bzw. der Anlage gemäß Stand der Technik wird über Leitung 11 wasserstoffhaltiges Raffinerieabgas herangeführt und in Leitung 21 eingeleitet, über welche Erdgas und/oder ein weiterer kohlenwasserstoffhaltiger Strom, beispielsweise Naphtha oder Flüssiggas, als Reformierungsfeedstrom in das Verfahren bzw. die Anlage eingeführt wird. Die vermischten Ströme werden nachfolgend der Hydrodesulfurierungsstufe 20 zugeführt und in dieser unter Hydrodesulfurierungsbedingungen behandelt, so dass der in ihnen enthaltene Schwefel entfernt und ein schwefelfreier Einsatzgasstrom erhalten wird. Alternativ ist es auch möglich, das wasserstoffhaltige Raffinerieabgas und das Erdgas und/oder den weiteren kohlenwasserstoffhaltigen Strom getrennt einer Hydrodesulfurierungsstufe zuzuführen.

Nach dem Ausleiten aus der Hydrodesulfurierungsstufe wird der schwefelfreie Einsatzgasstrom über Leitung 25 in die Dampfreformierungsstufe 30 eingeleitet, nachdem ihm zuvor über Leitung 15 Wasserdampf zugemischt und das Einsatzgas-WasserdampfGemisch über nicht gezeigte Heizvorrichtungen auf eine Temperatur von typischerweise 550 bis 650 °C vorerhitzt wurde. In der Dampfreformierungsstufe erfolgt die Umsetzung der Kohlenwasserstoffe im Einsatzgas mit dem zugefügten Wasserdampf zu einem Rohsynthesegas, das im Wesentlichen Wasserstoff, Kohlenmonoxid, Kohlendioxid und nicht umgesetzte Kohlenwasserstoffe enthält. Die Umsetzung in der Dampfreformierungsstufe erfolgt dabei bei Temperaturen typischerweise zwischen 750 und 930 °C in mit Reformierungskatalysator gefüllten Spaltrohren, die von außen mittels einer Vielzahl von Brennern direkt beheizt werden. Der für den Brennerbetrieb erforderliche, gasförmige Brennstoff besteht zum Teil aus Erdgas, das über Leitung 31 herangeführt und über Leitung 32 und ein nicht gezeigtes Verteilersystem den Brennern zugeführt wird. Zum anderen Teil besteht der Brennstoff aus brennbaren Abgasströmen, die bei der Aufarbeitung des Rohsynthesegases erhalten werden. Beispielhaft wird in Fig. 1 gezeigt, dass ein brennbarer Abgasstromaus der Wasserstoffanreicherungsstufe 50, die als Druckwechseladsorptionsstufe (PSA) ausgestaltet ist, über Leitung 52 aus der Wasserstoffanreicherungsstufe ausgeleitet und gemeinsam mit dem Erdgas-Brenngas über Leitung 32 den Brennern zugeführt wird.

Das in der Dampfreformierungsstufe erzeugte Rohsynthesegas wird über Leitung 35 aus dieser ausgeleitet und einer mehrstufigen Behandlung unterzogen, die durch den Funktionsblock mit Bezugszeichen 40 symbolisiert werden soll. Die genauen Aufarbeitungsschritte richten sich dabei im Wesentlichen nach der Art des oder der erwünschten Synthesegasprodukte. Praktisch immer werden dabei ein oder mehrere Abkühlungsschritte mit oder ohne Dampferzeugung umfasst, wobei oft ein Teil des erzeugten Dampfes als Exportdampf an externe Verbraucher abgegeben wird. Abkühlungsschritte ohne Dampferzeugung beinhalten die Vorwärmung von Kesselspeisewasser und entmineralisiertem Wasser. Bei der Abkühlung anfallende Kondensate werden abgetrennt und beispielsweise als Prozessdampf in das Dampfreformierungsverfahren zurückgeführt. Ferner kann der Wärmeinhalt des abzukühlenden Rohsynthesegases und des von den Brennern erzeugten Rauchgases zur Vorwärmung anderer Verfahrensmedien genutzt werden.

Wenn eine möglichst hohe Wasserstoffausbeute gefordert wird, wird das Rohsynthesegas einer CO-Konvertierung (CO-Shift) unterzogen, bei der Kohlenmonoxid katalytisch unter dem Fachmann bekannten CO-Konvertierungsbedingungen mit zugesetztem Wasserdampf zu Wasserstoff und Kohlendioxid umgesetzt wird. Daran schließen sich Schritte zum Entfernen des Kohlendioxids, z. B. mittels Gaswäsche mit aminhaltigen Waschmitteln, und zum Abtrennen sonstiger unerwünschter Gastbestandteile, beispielsweise des Methans, durch kryogene Gaszerlegung in einer sog. Coldbox an.

Zur Herstellung von Reinwasserstoff folgt als abschließender Aufbereitungsschritt üblicherweise die Behandlung des Rohwasserstoffstroms in einer Wasserstoffanreicherungsstufe 50, die zumeist als Anlage zur Druckwechseladsorption ausgestaltet wird. Hierzu wird das behandelte und auf Temperaturen von 30 bis 40 °C abgekühlte Rohsynthesegas, das bereits einen Wasserstoffgehalt von beispielsweise 60 bis 75 mol-% aufweist, aus der mehrstufigen Behandlungsanlage 40 über Leitung 45 ausgeleitet und in die Wasserstoffanreicherungsstufe 50 eingeleitet. Die Druckwechseladsorption verwendet wasserstoffselektive Adsorbentien, beispielsweise Molekularsiebe, in einer Reihe von Behältern, die in einem gestaffelten zyklischen Modus betrieben werden, der zwischen einer Adsorptionsphase und verschiedenen Phasen der Regeneration wechselt. Die Regeneration des beladenen Adsorbens erfolgt durch schrittweise Druckentlastung und durch die Verwendung des Gases aus diesem Vorgang, um andere Adsorber im Regenerationszyklus mit einem anderen Druckniveau zu spülen. Die Wasserstoffrückgewinnung kann je nach Anzahl der Adsorber in einer Linie bis zu 90 % und bis zu 10 % betragen. Es kann eine sehr hohe Reinheit erreicht werden, mit etwa 50 ppm Argon und weniger als 10 ppm anderer Verunreinigungen. Das auf diese Weise gewonnene Wasserstoff-Reingas wird über Leitung 55 als Verfahrensprodukt ausgeleitet. Über Leitung 52 wird ein Gasstrom ausgeleitet, der die von dem Reinwasserstoff abgetrennten Verunreinigungen enthält. Da dieser Gasstrom aufgrund seines Gehalts von z. B. Kohlenmonoxid und Kohlenwasserstoffen brennbar ist, wird er über die Leitungen 52 und 32 zu den Brennern der Dampfreformierungsstufe geführt.

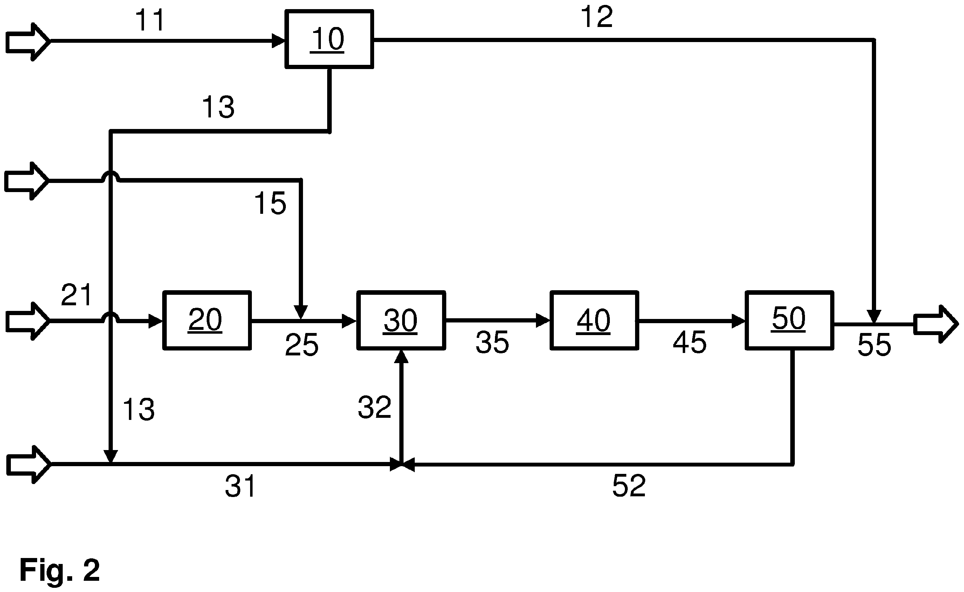

Fig. 2 zeigt das Blockschaltbild eines Verfahrens bzw. einer Anlage zum Herstellen von Reinwasserstoff aus einem Wasserstoff enthaltenden Raffinerieabgas gemäß einer ersten Ausgestaltung der Erfindung. Gleiche Bezugszeichen in den Figuren entsprechen Verfahrensschritten oder Anlagenteilen mit gleichen Eigenschaften und Funktionen, sofern im Einzelfall nichts anderes angegeben wird. Im Unterschied zu der in Fig. 1 gezeigten Ausgestaltung wird nunmehr über Leitung 11 wasserstoffhaltiges Raffinerieabgas herangeführt und in die erste Wasserstoffanreicherungsstufe 10 eingeleitet. Diese kann beispielsweise als Membrantrennanlage oder als Druckwechseladsorption ausgestaltet werden. Wenn der Wasserstoffgehalt des Raffinerieabgases ausreichend groß ist, beispielsweise größer als 60 mol-%, ist es vorteilhaft, die erste Wasserstoffanreicherungsstufe als Druckwechseladsorption auszugestalten. Der in der ersten Wasserstoffanreicherungsstufe erzeugte Reinwasserstoff wird dann über Leitung 12 ausgeleitet und gemeinsam mit dem in der zweiten Wasserstoffanreicherungsstufe 50 erzeugten Reinwasserstoffstrom über Leitung 55 aus dem Verfahren oder der Anlage ausgeleitet. Der ebenfalls in der ersten Wasserstoffanreicherungsstufe anfallende, Kohlenwasserstoffe und Verunreinigungen enthaltende Restgasstrom wird über Leitung 13 aus dieser ausgeleitet und ggf. nach Verdichtung mittels eines nicht bildlich dargestellten Verdichters zu der Dampfreformierungsstufe geführt, wie es in Fig. 1 gezeigt wird. Falls der Gehalt an Stickstoff und Kohlendioxid im Restgasstrom hoch ist, wird es bevorzugt, diesen Gasstrom über Leitungen 13, 31 und 32 als Brenngas zu den Brennern der Dampfreformierungsstufe zu führen, wie es in Fig. 2 gezeigt wird.

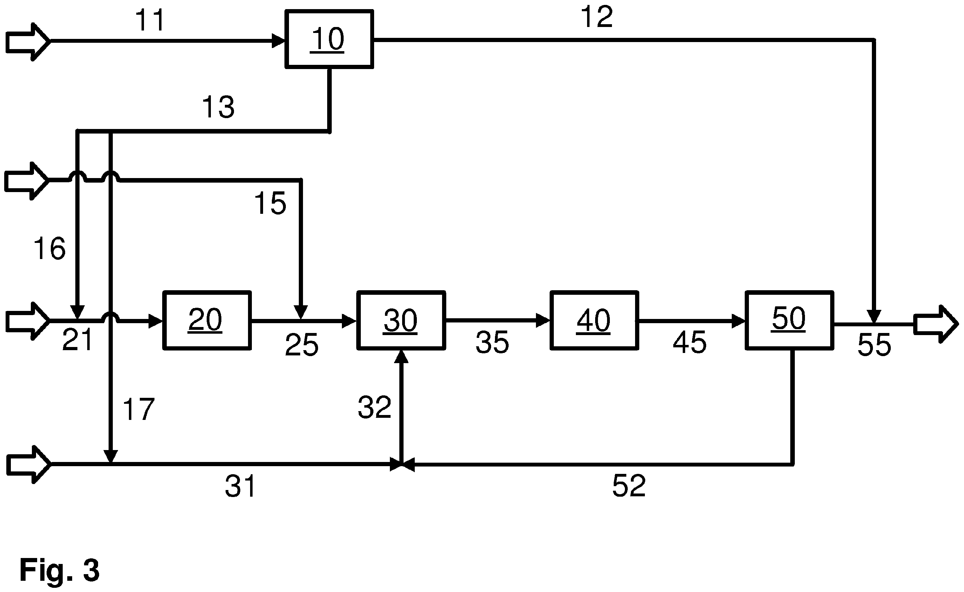

Fig. 3 zeigt das Blockschaltbild eines Verfahrens bzw. einer Anlage zum Herstellen von Reinwasserstoff aus einem Wasserstoff enthaltenden Raffinerieabgas gemäß einer zweiten Ausgestaltung der Erfindung. Gleiche Bezugszeichen in den Figuren entsprechen Verfahrensschritten oder Anlagenteilen mit gleichen Eigenschaften und Funktionen, sofern im Einzelfall nichts anderes angegeben wird. Im Unterschied zu der in Fig. 2 gezeigten Ausgestaltung wird nunmehr davon ausgegangen, dass das Wasserstoff enthaltende Raffinerieabgas an der Anlagengrenze oder aufgrund von Verdichtung mittels eines nicht gezeigten Verdichters mit einem höheren Druck, beispielsweise 50 barg oder mehr, zur Verfügung steht. Da dieser Druck als Eingangsdruck für eine Druckwechseladsorptionsanlage zu hoch ist, wird die erste Wasserstoffanreicherungsstufe bevorzugt als Membrantrennanlage ausgestaltet. Der als Permeatstrom der Membrantrennung erhaltene Reinwasserstoffstrom wird wie in Fig. 2 weitergeführt. Der als Retentat der Membrantrennung erhaltene Restgasstrom weist immer noch einen ausreichend hohen Druck, beispielsweise 35 barg oder mehr, und ist daher ohne weitere Verdichtung als Reformierungsfeedstrom oder Bestandteil eines Reformierungsfeedstroms geeignet, so dass er über Leitungen 13, 16 und 21 der Dampfreformierungsstufe zugeführt werden kann. Alternativ oder parallel kann ein Anteil oder der gesamte Restgasstrom über Leitungen 13, 17, 31 und 32 nach optionaler, nicht bildlich gezeigter Druckminderung als Brenngas zu den Brennern der Dampfreformierungsstufe geführt werden.

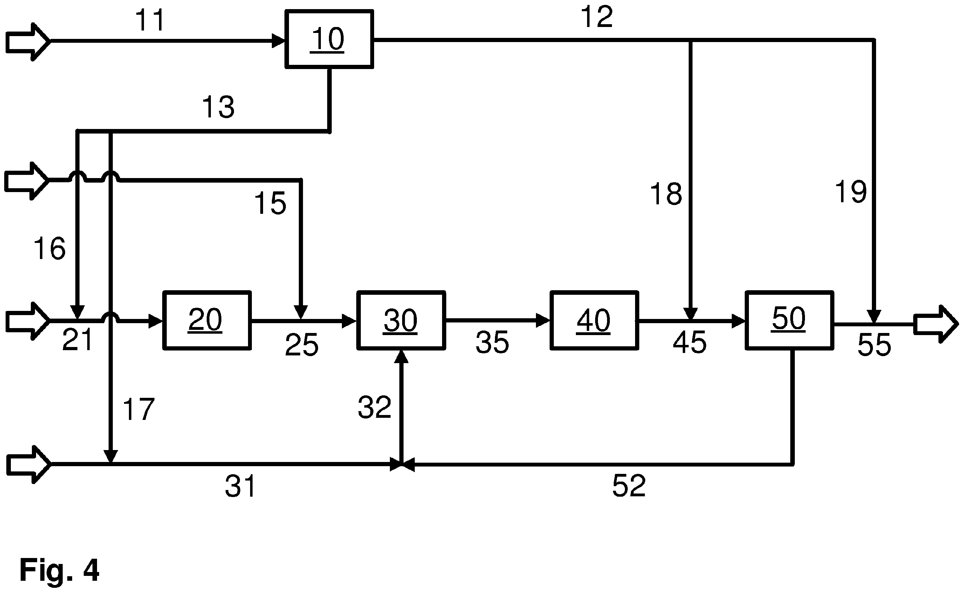

Fig. 4 zeigt das Blockschaltbild eines Verfahrens bzw. einer Anlage zum Herstellen von Reinwasserstoff aus einem Wasserstoff enthaltenden Raffinerieabgas gemäß einer ersten Ausgestaltung der Erfindung. Gleiche Bezugszeichen in den Figuren entsprechen Verfahrensschritten oder Anlagenteilen mit gleichen Eigenschaften und Funktionen, sofern im Einzelfall nichts anderes angegeben wird. Im Unterschied zu der in Fig. 3 gezeigten Ausgestaltung wird nunmehr angenommen, dass der Wasserstoffgehalt des Raffinerieabgases ausreichend groß ist, beispielsweise größer als 60 mol-%, aber das Raffinerieabgas nur mit einem Druck unwesentlich über Atmosphärendruck zur Verfügung steht, beispielsweise zwischen 1 und 5 barg. Es eignet sich daher zur Einleitung in die als Druckwechseladsorption ausgestaltete, erste Wasserstoffanreicherungsstufe 10. Der in der ersten Wasserstoffanreicherungsstufe erhaltene Reinwasserstoffstrom wird über Leitungen 12, 18 und 45 zu der zweiten Wasserstoffanreicherungsstufe oder - je nach Reinheitsanforderungen - über Leitungen 12, 19 und 55 direkt dem Reinwasserstoffprodukt zugeführt. Die Führung des Restgasstroms entspricht der im Zusammenhang mit Fig. 3 erläuterten; im Gegensatz zu Fig. 3 ist es nun aber erforderlich, den in Leitung 16 geführten Restgasstrom mittels eines nicht bildlich dargestellten Verdichters auf den Eintrittsdruck der Dampfreformierungsstufe von beispielsweise 35 barg zu bringen.

### Zahlenbeispiel

In dem nachfolgenden Zahlenbeispiel wird die Wirkungsweise und die Vorteile der Erfindung anhand der Ergebnisse von Simulationsrechnungen verdeutlicht:
Ein kohlenwasserstoffhaltiger Einsatzstrom mit einem Wasserstoffgehalt von etwa 63 mol-% steht mit einem Druck von 4 barg zur Verfügung. Mittels Simulationsrechnungen wurden für diesen Einsatzstrom zwei Verarbeitungsszenarien miteinander verglichen: Szenario A (Vergleichsbeispiel): Konventionelle Dampfreformierungsroute entsprechend Fig. 1 mit Verdichtung des Einsatzstromes auf 36 barg, Hydrodesulfurierung, Dampfreformierung, CO-Konvertierung, Synthesegaskühlung, PSA als Wasserstoffanreicherungsstufe.

Szenario B (Erfindung): Verdichtung des wasserstoffhaltigen Einsatzstromes auf 55 barg, Membrantrennanlage als erste Wasserstoffanreicherungsstufe, an Wasserstoff abgereicherter Retentatstrom zur Dampfreformierungsroute entsprechend Fig. 2, 3 oder 4 mit Hydrodesulfurierung, Dampfreformierung, CO-Konvertierung, Synthesegaskühlung, PSA als zweite Wasserstoffanreicherungsstufe. Das wasserstoffreiche Synthesegas aus der Dampfreformierungsroute wird mit dem an Wasserstoff angereicherten Permeatstrom aus der ersten Wasserstoffanreicherungsstufe vermischt und gemeinsam zu einer PSA als zweiter Wasserstoffanreicherungsstufe geführt.

Wie anhand der in der nachfolgenden Tabelle zusammengestellten Ergebnisse ersichtlich ist, führt das erfindungsgemäße Szenario B bei gleicher Wasserstoffkapazität zu signifikanten Einsparungen hinsichtlich des Dampfexports und der CO₂-Emissionen. Der geringere Dampfexport ist oft vorteilhaft, da die bei der konventionellen Dampfreformierungsroute erzeugte, vergleichsweise große Menge erzeugten Exportdampfs oft nicht in ausreichendem Maße an externe Verbraucher abgegeben werden kann. Der Mehrverbrauch an elektrischem Strom in Szenario B ist auf die Verdichtung des wasserstoffhaltigen Einsatzstroms auf den Eintrittsdruck in die Membrantrennanlage zurückzuführen. Falls der Einsatzstrom bereits mit höherem Druck zur Verfügung steht, reduziert sich der Stromverbrauch und verbessert sich die Energiebilanz des Verfahrens zusätzlich.

In dem gezeigten Zahlenbeispiel wurde Erdgas nur als Brenngas bzw. Brennstoff für die Brenner verwendet. Das Einsatzgas für die Dampfreformeirung war ein wasserstoffreiches Raffinerieabgas.

| | **Szenario A (Vgl.bsp.)** | **Szenario B (Erfindung)** |
|---|---|---|
| Wasserstoffkapazität, Nm³/h | 110000 | 110000 |
| Beitrag Membrantrennung zur H₂-Gesamtprod., % | 0 | 20 |
| Einsatzstrom (H₂-haltig), kg/h | 26376 | 27068 |
| Brennstoff (Erdgas), Nm³/h | 3614 | 1320 |
| Verbrauch elektrischer Strom, kW | 7417 | 10003 |
| Dampfexport, kg/h | 77982 | 59819 |
| CO₂-Emission, t/h | 72 | 68 |

### Bezugszeichenliste

- 10: erste Wasserstoffanreicherungsstufe (Membran oder PSA)
- 11 - 13: Leitung
- 15 - 19: Leitung
- 20: Hydrodesulfurierungsstufe (HDS)
- 21, 25: Leitung
- 30: Dampfreformierungsstufe
- 31, 32, 35: Leitung
- 40: mehrstufige Behandlungsanlage
- 45: Leitung
- 50: zweite Wasserstoffanreicherungsstufe (PSA)
- 52, 55: Leitung

## Patentansprüche

1. Verfahren zum Herstellen von Reinwasserstoff aus einem Wasserstoff und Kohlenwasserstoffe enthaltenden Einsatzgas, insbesondere aus einem wasserstoffhaltigen Raffinerieabgas, umfassend folgende Schritte:
(a) Bereitstellen eines Wasserstoff und Kohlenwasserstoffe enthaltenden Einsatzgasstroms,
(b) Zuführen des Wasserstoff und Kohlenwasserstoffe enthaltenden Einsatzgasstroms zu einer ersten Wasserstoffanreicherungsstufe und Auftrennen des ersten Einsatzgasstroms in der ersten Wasserstoffanreicherungsstufe in einen an Wasserstoff angereicherten Teilstrom und einen an Wasserstoff abgereicherten Teilstrom,
(c) Bereitstellen eines Kohlenwasserstoffe enthaltenden Reformierungsfeedstroms, insbesondere eines Naphtha- oder Flüssiggasstroms, der einer Dampfreformierungsstufe zugeführt wird, wobei die Dampfreformierungsstufe eine Vielzahl von mit Katalysator befüllten Reformerrohren umfasst, die mittels Brennern beheizt werden,
(d) mindestens teilweises Umsetzen des Reformierungsfeedstroms in der Dampfreformierungsstufe unter Dampfreformierungsbedingungen zu einem Wasserstoff, Kohlenoxide und nicht umgesetzte Kohlenwasserstoffe enthaltenden Reformierungsproduktstrom,
(e) Ausleiten des Reformierungsproduktstroms aus der Dampfreformierungsstufe, Durchführen weiterer Behandlungsschritte mit dem Reformierungsproduktstrom, und Zuführen des behandelten Reformierungsproduktstroms zu einer zweiten, nach dem Prinzip der Druckwechseladsorption arbeitenden Wasserstoffanreicherungsstufe,
(f) Ausleiten eines Reinwasserstoff-Produktstroms aus der zweiten Wasserstoffanreicherungsstufe, **dadurch gekennzeichnet, dass**
(g) mindestens ein Teil des an Wasserstoff angereicherten Teilstroms der zweiten Wasserstoffanreicherungsstufe zugeführt oder in den Reinwasserstoff-Produktstrom eingeleitet wird und
(h) mindestens ein Teil des an Wasserstoff abgereicherten Teilstroms der Dampfreformierungsstufe als Reformierungsfeedstrom zugeführt oder in den Reformierungsfeedstrom eingeleitet wird und/oder den Brennern als Brenngasstrom zugeführt wird.

2. Verfahren nach Anspruch 1, **dadurch gekennzeichnet, dass** der an Wasserstoff angereicherte Teilstrom direkt der zweiten Wasserstoffanreicherungsstufe zugeführt oder direkt in den Reinwasserstoff-Produktstrom eingeleitet wird.

3. Verfahren nach Anspruch 1 oder 2, **dadurch gekennzeichnet, dass** der an Wasserstoff abgereicherte Teilstrom mit dem Reformierungsfeedstrom vermischt wird oder diesen ausschließlich bildet.

4. Verfahren nach einem der Ansprüche 1 bis 3, **dadurch gekennzeichnet, dass** die erste Wasserstoffanreicherungsstufe eine wasserstoffselektive Membran enthält, wobei der an Wasserstoff angereicherte Teilstrom als Permeatstrom und der an Wasserstoff abgereicherte Teilstrom als Retentatstrom erhalten wird.

5. Verfahren nach Anspruch 4, **dadurch gekennzeichnet, dass** der Druck des Wasserstoff und Kohlenwasserstoffe enthaltenden Einsatzgasstroms vor Einleiten in die erste Wasserstoffanreicherungsstufe mindestens 50 barg beträgt.

6. Verfahren nach Anspruch 4 oder 5, **dadurch gekennzeichnet, dass** der Wasserstoffgehalt des Wasserstoff und Kohlenwasserstoffe enthaltenden Einsatzgasstroms zwischen 40 und 70 mol-%, bevorzugt zwischen 50 und 68 mol-% beträgt.

7. Verfahren nach einem der Ansprüche 1 bis 3, **dadurch gekennzeichnet, dass** die erste Wasserstoffanreicherungsstufe nach dem Prinzip der Druckwechseladsorption (PSA) arbeitet.

8. Verfahren nach Anspruch 7, **dadurch gekennzeichnet, dass** der Wasserstoffgehalt des Wasserstoff und Kohlenwasserstoffe enthaltenden Einsatzgasstroms mehr als 60 %, bevorzugt mehr als 70 mol-% beträgt.

9. Verfahren nach einem der vorigen Ansprüche, **dadurch gekennzeichnet, dass** die Dampfreformierungsstufe mehrere Teilreformierungsstufen umfasst, wobei die strömungsmäßig erste Teilreformierungsstufe als Vorreformierung ausgestaltet ist.

10. Verfahren nach einem der vorigen Ansprüche, **dadurch gekennzeichnet, dass** der Reformierungsfeedstrom einem Hydrodesulfurierungsschritt (HDS) zugeführt wird, wobei der Reformierungsfeedstrom mit einem Hydrierungsmittel vermischt und ihm unter Hydrodesulfurierungsbedingungen mindestens teilweise der Schwefel entzogen wird, wobei mindestens ein Teil des an Wasserstoff angereicherten Teilstroms als Hydrierungsmittel verwendet wird.

11. Anlage zum Herstellen von Reinwasserstoff aus einem Wasserstoff und Kohlenwasserstoffe enthaltenden Einsatzgas, insbesondere aus einem wasserstoffhaltigen Raffinerieabgas, umfassend folgende, miteinander in Fluidverbindung stehende Anlagenkomponenten und Bestandteile:
(a) Mittel zum Bereitstellen eines Wasserstoff und Kohlenwasserstoffe enthaltenden Einsatzgasstroms,
(b) eine erste Wasserstoffanreicherungsstufe, Mittel zum Zuführen des Wasserstoff und Kohlenwasserstoffe enthaltenden Einsatzgasstroms zu der ersten Wasserstoffanreicherungsstufe, Mittel zum Auftrennen des ersten Einsatzgasstroms in der ersten Wasserstoffanreicherungsstufe in einen an Wasserstoff angereicherten Teilstrom und einen an Wasserstoff abgereicherten Teilstrom,
(c) eine Dampfreformierungsstufe, umfassend eine Vielzahl von mit Katalysator befüllten Reformerrohren, die mittels Brennern beheizt werden, Mittel zum Bereitstellen eines Kohlenwasserstoffe enthaltenden Reformierungsfeedstroms, insbesondere eines Naphtha- oder Flüssiggasstroms, Mittel zum Zuführen des Reformierungsfeedstroms zu der Dampfreformierungsstufe,
(d) Mittel zum Ausleiten eines Reformierungsproduktstroms aus der Dampfreformierungsstufe, Mittel zum Durchführen weiterer Behandlungsschritte mit dem Reformierungsproduktstrom, eine zweite, nach dem Prinzip der Druckwechseladsorption (PSA) arbeitenden Wasserstoffanreicherungsstufe, Mittel zum Zuführen des Reformierungsproduktstroms oder des behandelten Reformierungsproduktstroms zu der zweiten Wasserstoffanreicherungsstufe,
(e) Mittel zum Ausleiten eines Reinwasserstoff-Produktstroms aus der zweiten Wasserstoffanreicherungsstufe,
**dadurch gekennzeichnet, dass** die Anlage ferner umfasst:
(f) Mittel zum Zuführen mindestens eines Teils des an Wasserstoff angereicherten Teilstroms zu der zweiten Wasserstoffanreicherungsstufe oder zum Einleiten desselben in den Reinwasserstoff-Produktstrom und
(g) Mittel zum Zuführen mindestens eines Teils des an Wasserstoff abgereicherten Teilstroms zu der Dampfreformierungsstufe als Reformierungsfeedstrom oder zum Einleiten in den Reformierungsfeedstrom und/oder zum Zuführen zu den Brennern als Brenngasstrom.

12. Anlage nach Anspruch 11, **dadurch gekennzeichnet, dass** die Mittel zum Zuführen des an Wasserstoff angereicherten Teilstroms zu der zweiten Wasserstoffanreicherungsstufe oder die Mittel zum Einleiten desselben in den Reinwasserstoff-Produktstrom so beschaffen sind, dass der an Wasserstoff angereicherte Teilstroms direkt der zweiten Wasserstoffanreicherungsstufe zugeführt oder direkt in den Reinwasserstoff-Produktstrom wird.

13. Anlage nach Anspruch 11 oder 12, **dadurch gekennzeichnet, dass** die Anlage Mittel umfasst, die es gestatten, dass der an Wasserstoff abgereicherte Teilstrom mit dem Reformierungsfeedstrom vermischt wird oder diesen ausschließlich bildet.

14. Anlage nach einem der Ansprüche 11 bis 13, **dadurch gekennzeichnet, dass** die erste Wasserstoffanreicherungsstufe eine wasserstoffselektive Membran enthält, wobei der an Wasserstoff angereicherte Teilstrom als Permeatstrom und der an Wasserstoff abgereicherte Teilstrom als Retentatstrom erhalten wird, oder dass die erste Wasserstoffanreicherungsstufe nach dem Prinzip der Druckwechseladsorption (PSA) ausgestaltet ist.

15. Anlage nach einem der vorigen Ansprüche, **dadurch gekennzeichnet, dass** die Dampfreformierungsstufe mehrere Teilreformierungsstufen umfasst, wobei die strömungsmäßig erste Teilreformierungsstufe als Vorreformierung ausgestaltet ist.

16. Anlage nach einem der vorigen Ansprüche, **dadurch gekennzeichnet, dass** eine Hydrodesulfurierungsstufe und ferner Mittel umfasst werden, die es gestatten, dass der Reformierungsfeedstrom der Hydrodesulfurierungsstufe zugeführt wird, wobei die Hydrodesulfurierungsstufe in der Weise in Fluidverbindung mit der ersten Wasserstoffanreicherungsstufe steht, dass mindestens ein Teil des an Wasserstoff angereicherten Permeatstroms in der Hydrodesulfurierungsstufe als Hydrierungsmittel verwendbar ist.
